(19) Europäisches Patentamt European Patent Office Office européen des brevets

(11) **EP 3 394 975 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **16706163.9**

(22) Anmeldetag: **19.02.2016**

(51) Internationale Patentklassifikation (IPC):
**H02M 7/483** *(2007.01)* **G05B 19/418** *(2006.01)*
**G05B 23/02** *(2006.01)*

(52) Gemeinsame Patentklassifikation (CPC):
**G05B 23/0283; G05B 19/4184; G05B 23/0289; H02M 7/4835;** H02M 7/483

(86) Internationale Anmeldenummer:
**PCT/EP2016/053573**

(87) Internationale Veröffentlichungsnummer:
**WO 2017/140377 (24.08.2017 Gazette 2017/34)**

(54) **VERFAHREN ZUM ERMITTELN EINER ZEITDAUER**

METHOD FOR DETERMINING A TIME DURATION

PROCÉDÉ DE DÉTERMINATION D'UNE DURÉE DE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.10.2018 Patentblatt 2018/44**

(73) Patentinhaber: **Siemens Energy Global GmbH & Co. KG
81739 München (DE)**

(72) Erfinder:
• **LANG, Jörg
  95346 Stadtsteinach (DE)**
• **SCHULZE, Marco
  90427 Nürnberg (DE)**
• **WIENERS-REHRMANN, Tobias
  37688 Beverungen (DE)**

(56) Entgegenhaltungen:
**DE-A1-102008 008 357    US-A1- 2010 314 937**

**Beschreibung**

Die Erfindung betrifft ein Verfahren zum Ermitteln einer Zeitdauer bis zu der nächsten Wartung eines elektrischen Stromrichters und eine Überwachungseinrichtung.

Stromrichter sind leistungselektronische Schaltungen zum Umwandeln von elektrischer Energie. Mit Stromrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Stromrichter können eine Vielzahl von gleichartigen Modulen (die auch als Submodule bezeichnet werden) aufweisen, welche elektrisch in Reihe geschaltet sind. Diese Module weisen jeweils mindestens zwei elektronische Schaltelemente und einen elektrischen Energiespeicher auf. Solche Stromrichter werden als modulare Multilevelstromrichter bezeichnet und gehören zu den VSC-Stromrichtern (VSC = voltage sourced converter). Durch die elektrische Reihenschaltung der Module lassen sich hohe Ausgangsspannungen erreichen. Die Stromrichter sind einfach an unterschiedliche Spannungen anpassbar (skalierbar) und eine gewünschte Ausgangsspannung kann relativ genau erzeugt werden. Modulare Multilevelstromrichter werden oftmals im Hochspannungsbereich eingesetzt, beispielsweise als Stromrichter bei Hochspannungs-Gleichstrom-Übertragungsanlagen oder als Blindleistungskompensatoren bei flexiblen Drehstromübertragungssystemen.

Um den Stromrichter auch bei einem Auftreten eines Defektes an einem oder mehreren Modulen weiterbetreiben zu können, weist der Stromrichter Reserve-Module auf, die bei einem defektfreien Stromrichter überzählig sind (und daher bei einem defektfreien Stromrichter nicht für den Betrieb des Stromrichters benötigt werden). Wenn bei einem Modul ein Defekt auftritt, dann wird dieses defekte Modul überbrückt (kurzgeschlossen), und anstelle des defekten Moduls wird eines der verfügbaren (überzähligen, redundanten) Reserve-Module benutzt. Wenn nach einer längeren Betriebsdauer des Stromrichters mehrere Module defekt sind und als Ersatz dementsprechend mehrere Reserve-Module benutzt werden, dann ist die Anzahl der verfügbaren Reserve-Module gegenüber der ursprünglichen Anzahl der Reserve-Module verringert. Im Rahmen einer Wartung werden dann die defekten Module des Stromrichters erneuert. Nach der Wartung ist dann wieder die ursprüngliche Anzahl an verfügbaren (überzähligen, redundanten) Reserve-Modulen vorhanden; diese verfügbaren Reserve-Module können dann beim nächsten Auftreten von Defekten an Modulen zum Ersatz der defekten Module eingesetzt werden. Ein Stromrichter mit einem derartigen Reserve-Modul ist aus der Schrift WO 2014/072488 A2 bekannt.

Eine Wartung des Stromrichters kann in regelmäßigen Zeitabständen vorgenommen werden, beispielsweise einmal im Jahr. Wenn sich jedoch bei der Wartung herausstellt, dass noch eine ausreichende Anzahl an verfügbaren Reserve-Modulen vorhanden ist, dann hätte mit der Wartung (und der damit verbundenen unerwünschten Abschaltung des Stromrichters) noch gewartet werden können; die Wartung ist dann - zumindest bezüglich der Anzahl der verfügbaren Reserve-Module - zu früh erfolgt.

Die Schrift US 2010/314937 A1 offenbart einen rekonfigurierbaren Multi-Zellen-Stromrichter, der eine Vielzahl von Zellen aufweist. Die Zellen weisen jeweils fest installierte Teile sowie einen austauschbaren Teil auf. In jeder Zelle vorhandene Überbrückungsschalter erlauben im Falle eines Defekts einen Austausch des austauschbaren Teils der Zelle, ohne den Stromrichter abschalten zu müssen (hot swapping).

Die Schrift DE 10 2008 008 357 A1 offenbart ein Verfahren und ein System zur Ermittlung von Zuverlässigkeitsparametern einer technischen Anlage. Dabei werden aus gesammelten Informationen eines Parser-Moduls und Datenbanken Eingangsparameter für ein Zuverlässigkeitsberechnungsmodell ermittelt. Dabei handelt es sich im Wesentlichen um Ausfallraten von Einzelkomponenten, Teilsystemen oder des Gesamtsystems, Reparaturraten von Einzelkomponenten, Teilsystemen oder des Gesamtsystems usw.

Der Erfindung liegt die Aufgabe zugrunde, ein Verfahren und eine Überwachungseinrichtung anzugeben, mit denen eine zu frühe Durchführung einer Wartung vermieden werden kann.

Diese Aufgabe wird erfindungsgemäß gelöst durch ein Verfahren und durch eine Überwachungseinrichtung nach den unabhängigen Patentansprüchen. Vorteilhafte Ausführungsformen des Verfahrens sind in den abhängigen Patentansprüchen angegeben.

Offenbart wird ein Verfahren zum Ermitteln einer Zeitdauer bis zu der nächsten Wartung eines elektrischen Stromrichters, der eine Vielzahl von gleichartigen Modulen aufweist, welche jeweils mindestens zwei elektronische Schaltelemente und einen elektrischen Energiespeicher aufweisen, wobei eine Teilmenge der Module Reserve-Module (für den Fall des Auftretens von defekten Modulen) sind, so dass bei einem Auftreten eines defekten Moduls anstelle des defekten Moduls eines der Reserve-Module benutzt (verwendet) werden kann, wobei bei dem Verfahren

- die (zeitbezogene/zeitliche) Häufigkeit des Auftretens von defekten Modulen bestimmt wird, und
- die Zeitdauer bis zu der nächsten Wartung ermittelt wird, indem die Anzahl der zum Ermittlungszeitpunkt verfügbaren Reserve-Module verglichen wird mit der Häufigkeit des Auftretens von defekten Modulen.

Die Häufigkeit des Auftretens von defekten Modulen ist also eine Häufigkeit des Auftretens von defekten Modulen pro Zeiteinheit. Diese Häufigkeit des Auftretens von defekten Modulen kann auch als "Moduldefektrate" oder als "Modulausfallrate" bezeichnet werden. Mit dem Verfahren kann aus der bestimmten Häufigkeit (das heißt der ermittelten Häufigkeit) des Auftretens von defekten Modulen und der Anzahl der zum Ermittlungszeitpunkt verfügbaren Reserve-Module die Zeitdauer bis zu der nächsten Wartung des Stromrichters ermittelt werden. Die Zeitdauer bis zu der nächsten Wartung des Stromrichters ist diejenige Zeitdauer, während der noch keine Wartung durchgeführt zu werden braucht, weil noch verfügbare Reserve-Module vorhanden sind. Dieses Verfahren erlaubt es also, eine Wartung erst dann durchzuführen, wenn sie wirklich notwendig ist. Unnötige Wartungen (und damit unnötige Kosten und unnötige Stillstandszeiten des Stromrichters) werden damit vermieden.

Das Verfahren läuft so ab, dass die Häufigkeit des Auftretens von defekten Modulen bestimmt wird, indem (beispielsweise mittels einer Steuereinrichtung des Stromrichters) die Anzahl der Module bestimmt wird, bei denen während einer vorbestimmten Zeitspanne (Zeitfenster) ein Defekt auftritt. Diese Anzahl kann durch die Zeitspanne geteilt werden. Bei diesem Verfahren wird also während der vorbestimmten Zeitspanne (also beispielsweise während einer Zeitspanne von drei Monaten) bestimmt (registriert), wie viele defekte Module des Stromrichters während dieser Zeitspanne auftreten (d.h. wie viele Module während dieser Zeitspanne kaputt gehen). Diese Anzahl der defekten Module bezogen auf die Zeitspanne (mathematisch entspricht das der Division der Anzahl durch die Zeitspanne) ergibt die Häufigkeit des Auftretens von defekten Modulen.

Das Verfahren läuft so ab, dass zum Ermitteln der Zeitdauer anstelle der bestimmten Häufigkeit eine auf Erfahrungen der Vergangenheit beruhende Erfahrungs-Häufigkeit verwendet wird. Diese Variante des Verfahrens ermöglicht es, Erfahrungen aus der Vergangenheit beim Ermitteln der Zeitdauer zu verwenden. Solche Erfahrungen aus der Vergangenheit können beispielsweise Häufigkeiten des Auftretens von defekten Modulen sein, welche während der letzten Jahre oder sogar während der letzten Jahrzehnte bestimmt worden sind. Mittels derartiger Erfahrungs-Häufigkeiten lässt sich der Einfluss von kurzzeitigen Schwankungen der Häufigkeit des Auftretens von defekten Modulen verringern oder beseitigen.

Das Verfahren läuft so ab, dass zum Ermitteln der Zeitdauer anstelle der bestimmten Häufigkeit eine auf Erfahrungen der Vergangenheit beruhende Erfahrungs-Häufigkeit verwendet wird, wenn die Erfahrungs-Häufigkeit größer ist als die bestimmte Häufigkeit. Diese Variante des Verfahrens weist eine besonders hohe Sicherheit auf: Wenn die Erfahrungs-Häufigkeit größer ist als die bestimme Häufigkeit des Auftretens von defekten Modulen, dann wird die Erfahrungs-Häufigkeit verwendet und nicht die bestimmte Häufigkeit. Die mittels der Erfahrungs-Häufigkeit ermittelte Zeitdauer ist dann kürzer als die Zeitdauer, die mittels der bestimmten Häufigkeit ermittelt worden wäre. Dadurch wird das Risiko deutlich verringert, dass eine Wartung zu spät durchgeführt wird.

Das Verfahren kann so ablaufen, dass das Ermitteln der Zeitdauer wiederholt durchgeführt wird. Beispielsweise kann die Zeitdauer einmal pro Tag ermittelt werden. Dadurch kann schneller reagiert werden, falls sich die Zeitdauer bis zur nächsten Wartung signifikant verringert (beispielsweise weil unerwartet die Häufigkeit des Auftretens von defekten Modulen ansteigt).

Das Verfahren kann so ablaufen, dass die ermittelte Zeitdauer an einem Ausgabegerät, insbesondere an einer Anzeige, ausgegeben wird. Dabei gibt es verschiedene Möglichkeiten der Ausgabe der ermittelten Zeitdauer an dem Ausgabegerät. Zum Beispiel kann die Zeitdauer bis zur nächsten Wartung in Tagen ausgegeben werden ("Die nächste Wartung ist spätestens in 183 Tagen durchzuführen.") oder es kann das Datum der nächsten Wartung ausgegeben werden ("Die nächste Wartung ist spätestens am 14. Oktober 2016 durchzuführen.").

Das Verfahren kann auch so ablaufen, dass ein Alarmsignal ausgegeben wird, wenn die ermittelte Zeitdauer einen Grenzwert erreicht oder unterschreitet. Beispielsweise kann ein solches Alarmsignal dazu dienen, Bedienungspersonal des Stromrichters über eine kurzfristig notwendig werdende Wartung zu informieren ("Achtung! Die nächste Wartung muss spätestens in einem Monat durchgeführt werden.").

Offenbart wird auch eine Überwachungseinrichtung für einen elektrischen Stromrichter, welche eingerichtet und bestimmt ist zum Durchführen des Verfahrens nach einer der vorstehend angegebenen Varianten.

Offenbart wird weiterhin eine Überwachungseinrichtung zum Ermitteln einer Zeitdauer bis zu der nächsten Wartung eines elektrischen Stromrichters, der eine Vielzahl von gleichartigen Modulen aufweist, welche jeweils mindestens zwei elektronische Schaltelemente und einen elektrischen Energiespeicher aufweisen, wobei eine Teilmenge der Module Reserve-Module (für den Fall des Auftretens von defekten Modulen) sind, so dass bei einem Auftreten eines defekten Moduls anstelle des defekten Moduls eines der Reserve-Module benutzt (verwendet) werden kann, wobei die Überwachungseinrichtung

- die (zeitbezogene/zeitliche) Häufigkeit des Auftretens von defekten Modulen bestimmt, und
- die Zeitdauer bis zu der nächsten Wartung ermittelt durch Vergleichen der Anzahl der zum Ermittlungszeitpunkt verfügbaren Reserve-Module mit der Häufigkeit des Auftretens von defekten Modulen. Die Überwachungseinrichtung kann auch

Verfahrensschritte der anderen vorstehend angegebenen Varianten des Verfahrens ausführen. Diese Überwachungseinrichtung weist gleichartige Vorteile auf, wie sie oben im Zusammenhang mit dem Verfahren zum Ermitteln der Zeitdauer angegeben sind.

Offenbart wird weiterhin ein elektrischer Stromrichter und eine Überwachungseinrichtung nach einer der vorstehend beschriebenen Varianten.

Im Folgenden wird die Erfindung anhand von Ausführungsbeispielen näher erläutert. Gleiche Bezugszeichen verweisen dabei auf gleiche oder gleich wirkende Elemente. Dazu ist in

Figur 1     ein Ausführungsbeispiel eines Stromrichters, der eine Vielzahl von Modulen aufweist, in
Figur 2     ein Ausführungsbeispiel eines Moduls, in
Figur 3     ein weiteres Ausführungsbeispiel eines Moduls, in
Figur 4     ein Ausführungsbeispiel des Stromrichters und einer Überwachungseinrichtung, und in
Figur 5     ein beispielhafter Verfahrensablauf dargestellt.

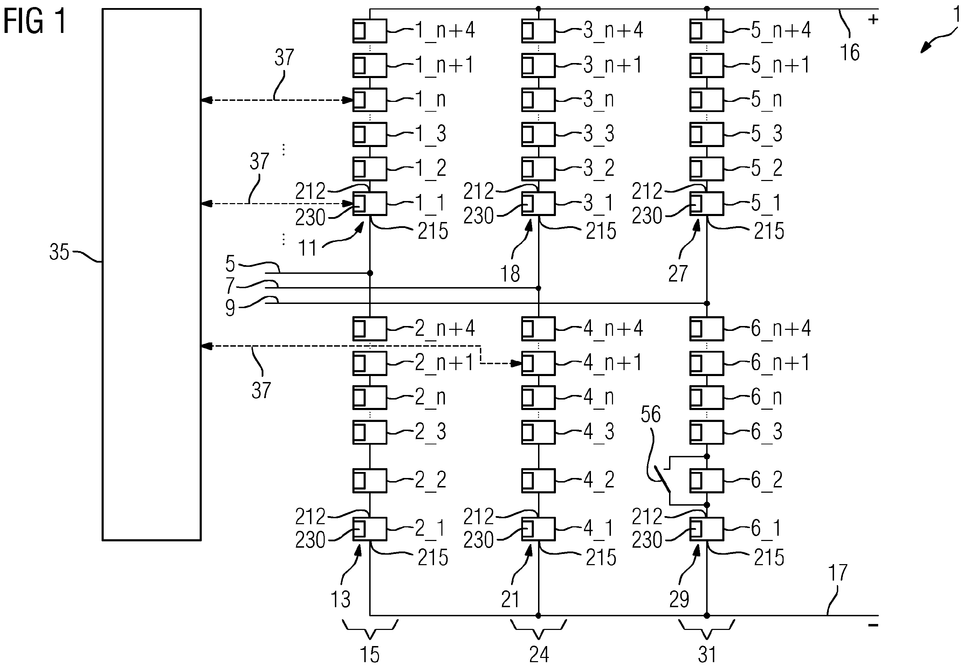

In Figur 1 ist ein Stromrichter 1 in Form eines modularen Multilevelstromrichters 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Modulen (1_1, 1_2, 1_3 ... 1_n, 1_n+1, 1_n+2, 1_n+3, 1_n+4; 2_1 ... 2_n+4; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig (n+4) Module auf. Die Anzahl der (mittels ihrer galvanischen Stromanschlüsse) elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 und zusätzlich die Reserve-Module 1_n+1 = 1_37, 1_n+2 = 1_38, 1_n+3 = 1_39 und 1_n+4 = 1_40 auf. Von den 40 Modulen werden also 36 Module zum Betrieb des Stromrichters benötigt (36 Betriebs-Module), und 4 Module (die Module 1_37 bis 1_40) sind Reserve-Module. Die anderen Phasenmodulzweige 13, 18, 21, 27 und 29 sind gleichartig aufgebaut.

Im linken Bereich der Figur 1 ist schematisch eine Steuereinrichtung 35 (Control-System 35) für die Module 1_1 bis 6_n+4 dargestellt. Von dieser zentralen Steuereinrichtung 35 werden optische Nachrichten per Lichtwellenleiter zu den einzelnen Modulen übertragen. Die Nachrichtenübertragung zwischen der Steuereinrichtung und einem Modul ist jeweils symbolhaft durch eine gestrichelte Linie 37 dargestellt; die Richtung der Nachrichtenübertragung ist durch die Pfeilspitze an den gestrichelten Linien 37 symbolisiert. Dies ist am Beispiel der Module 1_1, 1_n und 4_n+1 dargestellt; zu den anderen Modulen werden auf die gleiche Art und Weise Nachrichten gesendet bzw. von diesen Modulen Nachrichten empfangen.

Jedem Modul ist ein Überbrückungsschalter zugeordnet, der das Modul (bei einem Defekt des Moduls) überbrücken (kurzschliessen) kann. Ein solcher Überbrückungsschalter 56 ist aus Gründen der Übersichtlichkeit nur bei dem Modul 6_2 dargestellt. Allen anderen Modulen ist ebenfalls ein derartiger Überbrückungsschalter zugeordnet. Der Überbrückungsschalter 56 wird bei Auftreten eines Defekts an dem Modul 6_2 von einer modulinternen Überbrückungsschalter-Ansteuerschaltung geschlossen.

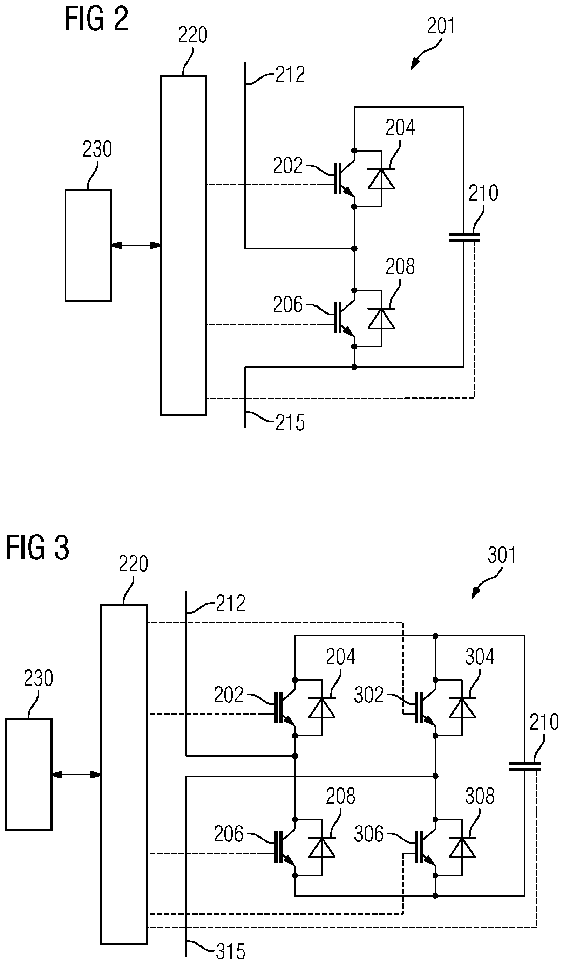

In Figur 2 ist beispielhaft der prinzipielle Aufbau eines Moduls 201 dargestellt. Dabei kann es sich beispielsweise um das Modul 1_1 des ersten Phasenmodulzweigs 11 (oder auch um eines der anderen in Figur 1 dargestellten Module) handeln. Das Modul ist als ein Halbbrückenmodul 201 ausgestaltet. Das Modul 201 weist ein erstes abschaltbares Halbleiterventil 202 mit einer ersten antiparallel geschalteten Diode 204 auf. Weiterhin weist das Modul 201 ein zweites abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202 und 206 ist ein erster galvanischer Modulanschluss 212 angeordnet. An dem Anschluss des zweiten Halbleiterventils 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine modulinterne elektronische Ansteuerschaltung 220 kann erreicht werden, dass zwischen dem ersten galvanischen Modulanschluss 212 und dem zweiten galvanischen Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

Zur modulexternen Kommunikation weist das Modul 201 einen optischen Kommunikationsanschluss 230 auf, der elektrisch mit der Ansteuerschaltung 220 verbunden ist. An den optischen Kommunikationsanschluss 230 werden zur modulexternen Kommunikation Lichtwellenleiter angeschlossen. Weiterhin kann die Ansteuerschaltung 220 auch Zustände des Moduls erfassen und an die zentrale Steuereinrichtung 35 melden. In Figur 2 ist beispielhaft mittels einer gestrichelten Linie angedeutet, dass die Ansteuerschaltung 220 den Ladezustand des Energiespeichers 210 erfasst und an die zentrale Steuereinrichtung 35 melden kann.

In Figur 3 ist ein weiteres Ausführungsbeispiel eines Moduls 301 dargestellt. Bei diesem Modul 301 kann es sich beispielsweise um das Modul 1_n (oder auch um eines der anderen in Figur 1 dargestellten Module) handeln. Neben dem bereits aus Figur 2 bekannten ersten Halbleiterventil 202, zweiten Halbleiterventil 206, erster Diode 204, zweiter Diode 208, Energiespeicher 210, Ansteuerschaltung 220 und Kommunikationsanschluss 230 weist das in Figur 3 dargestellte Modul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Modulanschluss 315 nicht mit dem zweiten Halbleiterventil 206 elektrisch verbunden, sondern mit einem Mittelpunkt einer elektrischen Reihenschaltung aus dem dritten Halbleiterventil 302 und dem vierten Halbleiterventil 306.

Das Modul 301 der Figur 3 ist ein sogenanntes Vollbrückenmodul 301. Dieses Vollbrückenmodul 301 zeichnet sich dadurch aus, dass bei entsprechender Ansteuerung der vier Halbleiterventile zwischen dem ersten galvanischen Modulanschluss 212 und dem zweiten galvanischen Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 1 kann entweder nur Halbbrückenmodule 201, nur Vollbrückenmodule 301 oder auch Halbbrückenmodule 201 und Vollbrückenmodule 301 aufweisen.

Die Darstellungen der Figuren 2 und 3 zeigen jeweils ein Modul mit dem ersten galvanischen Modulanschluss 212 und dem zweiten galvanischen Modulanschluss 215 bzw. 315. Über den ersten galvanischen Modulanschluss 212 und den zweiten galvanischen Modulanschluss 215, 315 fließen große elektrische Ströme des Stromrichters. Zusätzlich weist jedes Modul die Ansteuerschaltung 220 auf, die insbesondere die Schaltelemente 202, 206, 302 und/oder 306 ansteuert. Diese Ansteuerschaltung 220 kommuniziert über den optischen Kommunikationsanschluss 230 mittels Lichtwellenleitern potentialgetrennt mit modulexternen Einheiten (hier: mit der Steuereinrichtung 35, vgl. Figur 1).

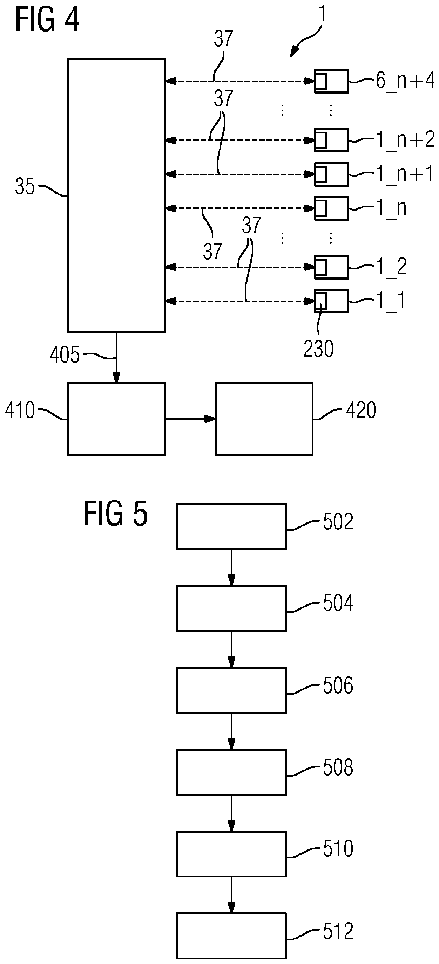

In Figur 4 sind von dem aus Figur 1 bekannten Multilevelstromrichter 1 lediglich die zentrale Steuereinrichtung 35 sowie einige beispielhafte Module (hier: die Module 1_1, 1_2, 1_n bis 1_n+2 und 6_n+4) dargestellt. Alle weiteren Module des Multilevelstromrichters 1 sind gleichartig mit der Steuereinrichtung 35 verbunden. Im Unterschied zur Darstellung der Figur 1 sind in Figur 4 die leistungsführenden galvanischen Anschlüsse 212, 215 der Module nicht dargestellt; es ist in Figur 4 lediglich der Kommunikationsanschluss 230 der einzelnen Module dargestellt.

Die Steuereinrichtung 35 ist mittels einer Kommunikationsverbindung 405 mit einer Überwachungseinrichtung 410 (Monitoring-System 410) verbunden. Über die Kommunikationsverbindung 405 erhält die Überwachungseinrichtung 410 Nachrichten mit Informationen über das Auftreten von Defekten bei Modulen (d.h. über den defektbedingten Ausfall von Modulen). Die Überwachungseinrichtung 410 speichert die mit den Nachrichten übertragenen Informationen, um diese auch später, ggf. mehrfach, auswerten zu können. Außerdem ist in der Überwachungseinrichtung 410 gespeichert, wie viele Module für den Betrieb des Stromrichters notwendig sind und wie viele Reserve-Module aktuell verfügbar sind (Anzahl der verfügbaren Reserve-Module). Weiterhin können in der Überwachungseinrichtung 410 eine stromrichterspezifische Erfahrungs-Häufigkeit des Auftretens von defekten Modulen, ein Grenzwert für die Ausgabe eines Alarmsignals und/oder andere stromrichterspezifische Werte gespeichert sein.

Die Überwachungseinrichtung 410 weist eine elektronische Schaltung auf und kann beispielsweise als ein Industrierechner oder als ein PC ausgestaltet sein. Die Überwachungseinrichtung 410 ist mit einem Ausgabegerät 420 (beispielsweise mit einem Monitor 420 oder einer Anzeige 420) verbunden.

Zum Betrieb des Stromrichters 1 werden in jedem Phasenmodulzweig n funktionsfähige Module benötigt. Wenn sich der Stromrichter 1 im Ursprungszustand (Auslieferungszustand) befindet (d.h. wenn keine defekten Module vorliegen), dann sind zum Betrieb des Stromrichters im ersten Phasenmodulzweig 11 die n Module 1_1 bis 1_n zum Betrieb ausreichend (Betriebs-Module). Die 4 Module 1_n+1 bis 1_n+4 sind verfügbare Reserve-Module; sie werden zunächst nicht für den Betrieb des Stromrichters 1 benötigt und sind daher überzählig (redundant).

Wenn nach längerer Betriebszeit des Stromrichters 1 beispielsweise bei dem Modul 1_3 ein Defekt auftritt (d.h. wenn das Modul 1_3 defektbedingt ausfällt), dann wird das Modul 1_3 mittels seines Überbrückungsschalters elektrisch überbrückt; anstelle des defekten Moduls 1_3 wird eines der Reserve-Module zum Betrieb des Stromrichters verwendet. Die Steuereinrichtung 35 registriert das Auftreten des Defektes an dem Modul 1_3 und sendet eine Nachricht über das Auftreten des Defektes an dem Modul 1_3 (wobei diese Nachricht auch den Zeitpunkt des Auftretens des Defekts enthält) über die Kommunikationsverbindung 405 an die Überwachungseinrichtung 410. Beim nächsten Auftreten eines Defekts an einem anderen Modul wird dieses andere Modul ebenfalls überbrückt und anstelle des defekten anderen Moduls ein anderes Reserve-Modul benutzt. In gleicher Art und Weise wird dann von der Steuereinrichtung 35 eine weitere Nachricht über die Kommunikationsverbindung 405 zu der Überwachungseinrichtung 410 gesendet. Diese weitere Nachricht enthält Informationen über den Defekt des anderen Moduls und über den Defektzeitpunkt. Dies wiederholt sich bei jedem Auftreten eines Defekts an einem der Module. Die Nachrichten bzw. die mit den Nachrichten übertragenen Informationen werden jeweils in der Überwachungseinrichtung 410 gespeichert. Bei jedem Defekt eines Moduls wird die (in der Überwachungseinrichtung 410 gespeicherte) Anzahl der verfügbaren Reserve-Module um eins verringert. Die Anzahl der (aktuell) verfügbaren Reserve-Module entspricht also der Differenz aus der Anzahl der ursprünglich verfügbaren Reserve-Module und der Anzahl der defekten Module.

Aufgrund der zu der Überwachungseinrichtung gesendeten Nachrichten liegen bei der Überwachungseinrichtung 410 stets aktuelle Informationen darüber vor, zu welchem Zeitpunkt bei welchem Modul ein Defekt aufgetreten ist. Die Überwachungseinrichtung ermittelt nun aus den vorliegenden Informationen die Anzahl der Module, die während einer vorbestimmten Zeitspanne (beispielsweise während der letzten sechs Monate) ausgefallen sind, das heißt, an denen während der vorbestimmten Zeitspanne ein Defekt aufgetreten ist. Daraufhin vergleicht die Überwachungseinrichtung 410 die Anzahl der zum Ermittlungszeitpunkt (noch) verfügbaren Reserve-Module mit dieser Häufigkeit des Auftretens von defekten Modulen und ermittelt so die maximal zulässige Zeitdauer bis zu der nächsten Wartung des elektrischen Stromrichters.

Beispiel:

Während der vergangenen 6 Monate ist an 3 Modulen ein Defekt aufgetreten. Die Überwachungseinrichtung bestimmt die Häufigkeit des Auftretens von defekten Modulen: 3 defekte Module während der Zeitspanne von sechs Monaten entspricht einer Häufigkeit des Auftretens von defekten Modulen von 0,5 defekten Modulen pro Monat.

Im Beispiel weist der elektrische Stromrichter zum Ermittlungszeitpunkt (noch) 10 verfügbare Reserve-Module auf. Die Häufigkeit des Auftretens von defekten Modulen beträgt 0,5 Module pro Monat. Daraus ermittelt die Überwachungseinrichtung 410 die Zeitdauer bis zur nächsten Wartung folgendermaßen:

$$Zeitdauer\ bis\ zur\ nächsten\ Wartung = \frac{\text{Anzahl der verfügbaren Reserve}-\text{Module}}{\text{Häufigkeit des Auftretens defekter Module}}$$

$$Zeitdauer\ bis\ zur\ nächsten\ Wartung = \frac{10\ \text{Module}}{0,5\ \text{Module pro Monat}} = 20\ \text{Monate}$$

Die ermittelte Zeitdauer bis zur nächsten Wartung des elektrischen Stromrichters 1 beträgt also 20 Monate. Dabei wurde die bestimmte Häufigkeit des Auftretens von defekten Modulen (hier: 0,5 defekte Module pro Monat) verwendet.

Wenn nun aus Erfahrungen der Vergangenheit bekannt ist, dass die Häufigkeit des Auftretens defekter Module (über einen längeren Zeitraum betrachtet) in der Vergangenheit 2 defekte Module pro Monat betragen hat, dann wird sicherheitshalber anstelle der bestimmten Häufigkeit (bestimmte Häufigkeit = 0,5 defekte Module pro Monat) diese Erfahrungs-Häufigkeit (Erfahrungs-Häufigkeit = 2 defekte Module pro Monat) verwendet. Die Überwachungseinrichtung 35 ermittelt dann die Zeitdauer bis zur nächsten Wartung folgendermaßen:

$$Zeitdauer\ bis\ zur\ n\ddot{a}chsten\ Wartung\ = \frac{Anzahl\ der\ verf\ddot{u}gbaren\ Reserve-Module}{H\ddot{a}ufigkeit\ des\ Auftretens\ defekter\ Module}$$

$$Zeitdauer\ bis\ zur\ n\ddot{a}chsten\ Wartung\ = \frac{10\ Module}{2\ Module\ pro\ Monat}\ =\ 5\ Monate$$

Unter Verwendung der Erfahrungs-Häufigkeit wird also eine Zeitdauer bis zur nächsten Wartung von 5 Monaten ermittelt. Die nächste Wartung wird also aus Sicherheitsgründen früher durchgeführt.

Insbesondere ist es vorteilhaft, die Erfahrungs-Häufigkeit dann zu verwenden, wenn die Erfahrungs-Häufigkeit größer ist als die bestimmte Häufigkeit des Auftretens von defekten Modulen.

Das Ermitteln der Zeitdauer kann vorzugsweise zeitlich wiederholt durchgeführt werden, beispielsweise einmal pro Tag (oder in anderen Zeitabständen). Damit wird stets ein aktueller Wert der Zeitdauer bis zur nächsten Wartung ermittelt. Dabei kann die Ermittlung der Zeitdauer bis zur nächsten Wartung für jeden Phasenmodulzweig einzeln durchgeführt werden; die Ermittlung der Zeitdauer bis zur nächsten Wartung kann aber auch für den Stromrichter als Ganzes durchgeführt werden.

Die ermittelte Zeitdauer wird an dem Ausgabegerät 420 ausgegeben. Bei diesem Ausgabegerät 420 kann es sich beispielsweise um einen Computermonitor 420 oder eine Anzeige 420 handeln. An diesem Ausgabegerät 420 wird zusätzlich ein Alarmsignal ausgegeben, wenn die ermittelte Zeitdauer einen vorbestimmten Grenzwert erreicht oder unterschreitet. Dieser Grenzwert kann beispielsweise "1 Monat" betragen. Mit anderen Worten wird dann das Alarmsignal ausgegeben, wenn die Zeitdauer bis zur nächsten Wartung kleiner oder gleich 1 Monat beträgt.

In Figur 5 ist noch einmal ein beispielhafter Ablauf eines Verfahrens zum Ermitteln der Zeitdauer bis zur nächsten Wartung dargestellt.

Verfahrensschritt 502:

Bestimmen der Häufigkeit des Auftretens von defekten Modulen anhand des tatsächlichen Auftretens von Defekten an den Modulen (durch die Überwachungseinrichtung).

Verfahrensschritt 504:

Verwenden einer Erfahrungs-Häufigkeit aus der Vergangenheit anstelle der bestimmten Häufigkeit, wenn die Erfahrungs-Häufigkeit größer ist als die bestimme Häufigkeit (optional).

Verfahrensschritt 506:

Ermitteln der Zeitdauer bis zur nächsten Wartung durch Vergleich der Anzahl der zum Ermittlungszeitpunkt verfügbaren Reserve-Module mit der Häufigkeit des Auftretens von defekten Modulen.

Verfahrensschritt 508:

Ausgeben der Zeitdauer bis zur nächsten Wartung an dem Ausgabegerät 420.

Verfahrensschritt 510:

Ausgeben eines Alarmsignals, wenn die ermittelte Zeitdauer einen Grenzwert erreicht oder unterschreitet (optional).

Verfahrensschritt 512:

Wiederholen des Ermittelns der Zeitdauer (optional).

Bei diesem beispielhaften Verfahrensablauf können einzelne Verfahrensschritte weggelassen werden, beispielsweise die Verfahrensschritte 504, 510 und/oder 512.

Es wurde ein Verfahren und eine Überwachungseinrichtung beschrieben, mit denen die Zeitdauer bis zur nächstfolgenden Wartung des Stromrichters ermittelt werden kann. Damit kann der Zeitpunkt der nächsten Wartung an den tatsächlichen Bedarf angepasst werden. Dass heißt, die nächste Wartung braucht erst dann stattzufinden, wenn diese notwendig ist, weil keine überzähligen Reserve-Module mehr verfügbar sind. Damit kann für den Stromrichter zu jedem Zeitpunkt die Zeitdauer bis zur nächsten Wartung ermittelt werden. Die Ermittlung der Zeitdauer erfolgt in der Überwachungseinrichtung, die ermittelte Zeitdauer bis zur nächsten Wartung wird online ausgegeben, beispielsweise auf ein Ausgabegerät 420. Der Zeitpunkt der nächsten Wartung wird also flexibel an den tatsächlichen Bedarf angepasst. Unnötige Wartungen (und damit unnötige Kosten sowie unnötige Stillstandszeiten des Stromrichters) werden vermieden.

**Patentansprüche**

1. Verfahren zum Ermitteln einer Zeitdauer bis zu der nächsten Wartung eines elektrischen Stromrichters, der eine Vielzahl von gleichartigen Modulen (1_1, 1_2, 1_3) aufweist, welche jeweils mindestens zwei elektronische Schaltelemente (202, 206) und einen elektrischen Energiespeicher (210) aufweisen, wobei jedem Modul ein Überbrückungsschalter zugeordnet ist, der bei Auftreten eines Defekts an dem Modul von einer modulinternen Überbrückungsschalter-Ansteuerschaltung geschlossen wird, wobei eine Teilmenge der Module Reserve-Module (1 n+1, 1 n+2) sind, die bei einem defektfreien Stromrichter überzählig sind, wobei bei einem Auftreten eines defekten Moduls (1_3) dieses defekte Modul mittels des jeweiligen Überbrückungsschalters überbrückt und anstelle des defekten Moduls (1 3) eines der Reserve-Module (1_n+1) benutzt wird, wobei bei dem Verfahren

   - von einer Steuereinrichtung (35) des Stromrichters ein Auftreten eines Defektes an einem Modul registriert und eine Nachricht über das Auftreten des Defekts an dem Modul über eine Kommunikationsverbindung an eine Überwachungseinrichtung (410) gesendet wird,
   - mit der Nachricht übertragene Informationen in der Überwachungseinrichtung (410) gespeichert werden,
   - die Häufigkeit des Auftretens von defekten Modulen bestimmt wird (502), indem von der Überwachungseinrichtung (410) aus den Informationen die Anzahl der Module, an denen während einer vorbestimmten Zeitspanne ein Defekt aufgetreten ist, ermittelt wird,
   - bei jedem Auftreten eines Defekts eine in der Überwachungseinrichtung (410) gespeicherte Anzahl der verfügbaren Reserve-Module um eins verringert wird, und
   - die Zeitdauer bis zu der nächsten Wartung ermittelt wird, indem von der Überwachungseinrichtung (410) die Anzahl der zum Ermittlungszeitpunkt verfügbaren Reserve-Module verglichen wird mit der Häufigkeit des Auftretens von defekten Modulen (506), wobei
   - zum Ermitteln der Zeitdauer anstelle der bestimmten Häufigkeit eine auf Erfahrungen der Vergangenheit beruhende Erfahrungs-Häufigkeit verwendet wird, wenn die Erfahrungs-Häufigkeit größer ist als die bestimmte Häufigkeit (504), wobei die Erfahrungs-Häufigkeit in der Überwachungseinrichtung gespeichert ist.

2. Verfahren nach einem der vorhergehenden Ansprüche,
   **dadurch gekennzeichnet, dass**

   - das Ermitteln der Zeitdauer wiederholt durchgeführt wird (512) .

3. Verfahren nach einem der vorhergehenden Ansprüche,
   **dadurch gekennzeichnet, dass**

   - die ermittelte Zeitdauer an einem Ausgabegerät (420) ausgegeben wird (508).

4. Verfahren nach einem der vorhergehenden Ansprüche,
   **dadurch gekennzeichnet, dass**

   - ein Alarmsignal ausgegeben wird, wenn die ermittelte Zeitdauer einen Grenzwert erreicht oder unterschreitet (510).

5. Überwachungseinrichtung (410) zum Ermitteln einer Zeitdauer bis zu der nächsten Wartung eines elektrischen Stromrichters (1), der eine Vielzahl von gleichartigen Modulen (1_1, 1_2, 1_3) aufweist, welche jeweils mindestens zwei elektronische Schaltelemente (202, 206) und einen elektrischen Energiespeicher (210) aufweisen,

wobei jedem Modul ein Überbrückungsschalter zugeordnet ist, der bei Auftreten eines Defekts an dem Modul von einer modulinternen Überbrückungsschalter-Ansteuerschaltung geschlossen wird,

wobei eine Teilmenge der Module Reserve-Module (1_n+1, 1_n+2) sind, die bei einem defektfreien Stromrichter überzählig sind,

wobei bei einem Auftreten eines defekten Moduls (1_3) dieses defekte Modul mittels des jeweiligen Überbrückungsschalters überbrückt, und anstelle des defekten Moduls (1_3) eines der Reserve-Module (1_n+1) benutzt wird,

wobei die Überwachungseinrichtung (410) eingerichtet ist,

- über eine Kommunikationsverbindung von dem Stromrichter eine Nachricht über das Auftreten eines Defekts an einem Modul zu erhalten,

**dadurch gekennzeichnet, dass**
die Überwachungseinrichtung (410) eingerichtet ist,

- über die Kommunikationsverbindung von einer Steuereinrichtung (35) des Stromrichters die Nachricht über das Auftreten des Defekts an einem Modul zu erhalten,
- mit der Nachricht übertragene Informationen zu speichern,
- die Häufigkeit des Auftretens von defekten Modulen zu bestimmen, indem sie aus den Informationen die Anzahl der Module, an denen während einer vorbestimmten Zeitspanne ein Defekt aufgetreten ist, ermittelt,
- eine Anzahl der verfügbaren Reserve-Module zu speichern,
- die Zeitdauer bis zu der nächsten Wartung zu ermitteln durch Vergleichen der Anzahl der zum Ermittlungszeitpunkt verfügbaren Reserve-Module mit der Häufigkeit des Auftretens von defekten Modulen (506), und
- eine auf Erfahrungen der Vergangenheit beruhende Erfahrungs-Häufigkeit zu speichern, und zum Ermitteln der Zeitdauer anstelle der bestimmten Häufigkeit diese Erfahrungs-Häufigkeit zu verwenden, wenn die Erfahrungs-Häufigkeit größer ist als die bestimmte Häufigkeit (504).

6. Anordnung mit einem elektrischen Stromrichter (1) und einer Überwachungseinrichtung (410) nach Anspruch 5.

**Claims**

1. Method for ascertaining a duration until the next maintenance operation for an electrical power converter that has a plurality of identical modules (1_1, 1_2, 1_3) that each have at least two electronic switching elements (202, 206) and an electrical energy storage unit (210), wherein a bypass switch is assigned to each module and is closed by a module-internal bypass switch actuation circuit if a defect occurs at the module, wherein a subset of the modules are reserve modules (1 n+1, 1 n+2) that are superfluous if a power converter is free of defects, wherein, if a defective module (1_3) occurs, this defective module is bypassed by means of the respective bypass switch and one of the reserve modules (1_n+1) is used instead of the defective module (1_3), wherein, in the method,

- an occurrence of a defect at a module is registered by a control apparatus (35) of the power converter and a message relating to the occurrence of the defect at the module is sent to a monitoring apparatus (410) via a communication connection,
- information transmitted with the message is stored in the monitoring apparatus (410),
- the frequency of the occurrence of defective modules is determined (502) by the monitoring apparatus (410) ascertaining, from the information, the number of modules at which a defect has occurred during a predetermined interval of time,
- a number of available reserve modules, which is stored in the monitoring apparatus (410), is reduced by one each time a defect occurs, and
- the duration until the next maintenance operation is ascertained by the monitoring device (410) comparing the number of reserve modules available at the ascertainment time with the frequency of the occurrence of defective modules (506), wherein,
- in order to ascertain the duration, an empirical frequency that is based on past experiences is used instead of the determined frequency if the empirical frequency is greater than the determined frequency (504), wherein the empirical frequency is stored in the monitoring apparatus.

2. Method according to the preceding claim,

**characterized in that**

- the duration is ascertained repeatedly (512).

3. Method according to the preceding claim,
**characterized in that**

- the ascertained duration is output at an output device (420) (508) .

4. Method according to the preceding claim,
**characterized in that**

- an alarm signal is output if the ascertained duration reaches or exceeds a limit value (510).

5. Monitoring apparatus (410) for ascertaining a duration until the next maintenance operation for an electrical power converter (1) that has a plurality of identical modules (1_1, 1_2, 1_3) that each have at least two electronic switching elements (202, 206) and an electrical energy storage unit (210), wherein a bypass switch is assigned to each module and is closed by a module-internal bypass switch actuation circuit if a defect occurs at the module,

wherein a subset of the modules are reserve modules (1 n+1, 1 n+2) that are superfluous if a power converter is free of defects,
wherein, if a defective module (1_3) occurs, this defective module is bypassed by means of the respective bypass switch and one of the reserve modules (1_n+1) is used instead of the defective module (1_3),
wherein the monitoring apparatus (410) is designed

- to receive a message relating to the occurrence of a defect at a module from the power converter via a communication connection,

**characterized in that**
the monitoring apparatus (410) is designed

- to receive the message relating to the occurrence of the defect at a module from a control apparatus (35) of the power converter via the communication connection,
- to store information transmitted with the message,
- to determine the frequency of the the occurrence of defective modules by ascertaining, from the information, the number of modules at which a defect has occurred during a predetermined interval of time,
- to store a number of available reserve modules,
- to ascertain the duration until the next maintenance operation by comparing the number of reserve modules available at the ascertainment time with the frequency of the occurrence of defective modules (506), and
- to store an empirical frequency that is based on past experiences and, in order to ascertain the duration, to use this empirical frequency instead of the determined frequency if the empirical frequency is greater than the determined frequency (504) .

6. Arrangement comprising an electrical power converter (1) and a monitoring apparatus (410) according to Claim 5.

**Revendications**

1. Procédé de détermination d'une durée de temps jusqu'au prochain entretien d'un convertisseur électrique, qui a une pluralité de modules (1_1, 1_2, 1_3) de même type, lesquels ont chacun au moins deux éléments (202, 206) électroniques de coupure et un accumulateur (210) d'énergie électrique, dans lequel, à chaque module est associé un interrupteur de shuntage que, s'il se produit un défaut sur le module, l'on ferme par un circuit de commande interne au module de l'interrupteur de shuntage, dans lequel un ensemble partiel des modules sont des modules (1 n+1, 1 n+2) de réserve, qui, pour un convertisseur sans défaut sont en surnombre, dans lequel, s'il apparaît un module (1_3) défectueux, on shunte ce module défectueux au moyen de l'interrupteur de shuntage respectif et on utilise, au lieu du module (1_3) défectueux, l'un des modules (1_n+1) de réserve, dans lequel, dans le procédé

- par un dispositif (35) de commande du convertisseur, l'apparition d'un défaut sur un module est enregistré et

**EP 3 394 975 B1**

un message sur l'apparition du défaut sur le module est envoyé à un dispositif (410) de contrôle en passant par une liaison de communication,

- des informations transmises par le message sont mises en mémoire dans le dispositif (410) de contrôle,
- on détermine (502) la fréquence de l'apparition de modules défectueux en déterminant, par le dispositif (410) de contrôle, à partir des informations, le nombre des modules sur lesquels un défaut est apparu pendant un laps de temps déterminé à l'avance,
- à chaque apparition d'un défaut, on diminue de un le nombre des modules de réserve disponibles mis en mémoire dans le dispositif (410) de contrôle, et
- on détermine la durée de temps jusqu'au prochain entretien en comparant, par le dispositif (410) de contrôle, le nombre des modules de réserve disponibles à l'instant de la détermination à la fréquence de l'apparition de modules (506) défectueux, dans lequel
- pour la détermination de la durée de temps, on utilise, au lieu de la fréquence déterminée, une fréquence expérimentale reposant sur des expériences dans le passé, si la fréquence expérimentale est plus grande que la fréquence (504) déterminée, la fréquence expérimentale étant mise en mémoire dans le dispositif de contrôle.

2. Procédé suivant l'une des revendications précédentes, **caractérisé en ce que**

    - l'on effectue (512) la détermination de la durée de temps d'une manière répétée.

3. Procédé suivant l'une des revendications précédentes, **caractérisé en ce que**

    - l'on émet (508) la durée de temps déterminée sur un appareil (420) d'émission.

4. Procédé suivant l'une des revendications précédentes, **caractérisé en ce que**

    - l'on donne un signal d'alerte, si la durée de temps déterminée atteint une valeur limite ou lui est inférieure (510).

5. Dispositif (410) de contrôle pour la détermination d'une durée de temps jusqu'au prochain entretien d'un convertisseur (1) électrique, qui a une pluralité de modules (1_1, 1_2, 1_3) de même type, lesquels ont chacun au moins deux éléments (202, 206) électroniques de coupure et un accumulateur (210) d'énergie électrique,

    dans lequel, à chaque module est associé un interrupteur de shuntage que, s'il se produit un défaut sur le module, l'on ferme par un circuit de commande interne au module d'interrupteur de shuntage,
    dans lequel un ensemble partiel des modules sont des modules (1_n+1, 1_n+2) de réserve, qui, pour un convertisseur sans défaut sont en surnombre,
    dans lequel, s'il apparaît un module (1_3) défectueux, on shunte ce module défectueux au moyen de l'interrupteur de shuntage respectif et on utilise, au lieu du module (1_3) défectueux, l'un des modules (1_n+1) de réserve, dans lequel le dispositif (410) de contrôle est agencé,

        - pour, en passant par une liaison de communication, obtenir du convertisseur un message sur l'apparition d'un défaut sur un module,

    **caractérisé en ce que**
    le dispositif (410) de contrôle est agencé,

        - pour, en passant par une liaison de communication, obtenir d'un dispositif (35) de commande du convertisseur, le message sur l'apparition d'un défaut sur le module,
        - pour mettre en mémoire des informations transmises par le message,
        - pour déterminer la fréquence de l'apparition de modules défectueux en déterminant, à partir des informations, le nombre de modules sur lesquels un défaut s'est produit pendant un laps de temps déterminé à l'avance,
        - pour mettre en mémoire un nombre des modules de réserve disponibles,
        - pour déterminer la durée de temps jusqu'au prochain entretien en comparant le nombre des modules de réserve disponibles à l'instant de la détermination à la fréquence de l'apparition de modules (506) défectueux, et
        - pour mettre en mémoire une fréquence expérimentale reposant sur des expériences dans le passé, et pour utiliser, pour la détermination de la durée de temps, au lieu de la fréquence déterminée, cette fréquence expérimentale, si la fréquence expérimentale est plus grande que la fréquence (504) déterminée.

11

**6.** Agencement comprenant un convertisseur (1) électrique et un dispositif (410) de contrôle suivant la revendication 5.

FIG 1

FIG 2

FIG 3

FIG 4

FIG 5

**IN DER BESCHREIBUNG AUFGEFÜHRTE DOKUMENTE**

**In der Beschreibung aufgeführte Patentdokumente**

- WO 2014072488 A2
- US 2010314937 A1
- DE 102008008357 A1